# NEUE EUROPÄISCHE PATENTSCHRIFT

(11) **EP 3 369 882 B2**
(45) Veröffentlichungstag und Bekanntmachung des Hinweises auf die Entscheidung über den Einspruch: **13.03.2024**
(45) Hinweis auf die Patenterteilung: 27.01.2021
(21) Anmeldenummer: 18159719.6
(22) Anmeldetag: 02.03.2018
(51) Int. Cl.: E05F 11/06, E05F 15/619, F16G 13/20

(54) **KETTENSCHUBANTRIEB UND KETTENBAHNHOF**
CHAIN DRIVE AND CHAIN STATION
ENTRAÎNEMENT À CHAÎNE EN POUSSÉE ET STATION À CHAÎNE

(30) Priorität: 03.03.2017 DE 202017101221 U
(43) Veröffentlichungstag der Anmeldung: 05.09.2018
(73) Patentinhaber: Aumüller Aumatic GmbH, 86672 Thierhaupten (DE)
(72) Erfinder: WACHMEIER, Hermann, 86153 Augsburg (DE)
(74) Vertreter: Ernicke, Klaus Stefan

(56) Entgegenhaltungen:
- EP-A1- 1 484 465
- EP-A2- 2 653 641
- DE-U1-202011 050 625

## Beschreibung

Die Erfindung betrifft einen Kettenschubantrieb und einen Kettenbahnhof mit den Merkmalen im Oberbegriff der selbstständigen Ansprüche.

Ein solcher Kettenbahnhof und Kettenschubantrieb sind aus der DE 20 2011 050 625 U1 bekannt. Der Kettenbahnhof weist eine einmal gebogene, U-förmige Kettenführung auf, die drei gerade Führungsabschnitte und nur einen einzelnen gebogenen Führungsabschnitt zwischen geraden Führungsabschnitten aufweist. Die Kettenführung greift nur im ersten geraden Führungsabschnitt beidseitig in die Schubkette ein. Im zweiten und dritten geraden Führungsabschnitt findet ein einseitiger Eingriff statt. Hier faltet sich die Schubkette selbsttätig ein, wobei ihr vorderes Endstück mit einem abstehenden Stift in einer Nut am gebogenen Führungsabschnitt gefangen ist. Beim Ketteneinschub wandert die Falt- oder Knickstelle von der gebogenen Führungsabschnitt entlang dieser beiden geraden Führungsabschnitte bis zu deren Ende.

DE 10 2010 010 719 A1 zeigt einen ähnlichen Kettenbahnhof und Kettenschubantrieb, wobei die mehrgliedrige Schubkette mit geschlossenem Rücken an den Kettenlaschen außenseitig geführt ist.

Bei dem Kettenschubantrieb der WO2004076792A2 bildet eine kanalförmige und spiralartig gewundene Kettenaufnahme die äußere Führung für eine Schubkette mit geschlossenem Rücken.

Die EP 2 653 641 A2 zeigt einen ähnlichen Kettenbahnhof, bei dem eine Kettenumlenkung eine scharfe Kante aufweist, um Platz und Bauhöhe des Kettenbahnhofs zu sparen.

Es ist Aufgabe der vorliegenden Erfindung, einen verbesserten Kettenschubantrieb aufzuzeigen.

Die Erfindung löst diese Aufgabe mit den Merkmalen in Anspruch 1.
Die beanspruchte Kettenschubantriebstechnik, d.h. der Kettenschubantrieb, der Kettenbahnhof und das Antriebsverfahren, haben verschiedene Vorteile.

Der Kettenbahnhof dient zur Aufnahme der eingefahrenen Schubkette des Kettenschubantriebs in einer Schleifen- oder Spiralform. Der Kettenbahnhof kann in einem Gehäuse des Kettenschubantriebs fest oder lose montiert sein. Durch Variation der Bahnhofslänge können unterschiedliche Kettenlängen aufgenommen werden.

Die beidseitig, d.h. an gegenüberliegenden Seiten, in die Schubkette eingreifende Kettenführung des Kettenbahnhofs kann die Schubkette an ihren drehbaren Rollen oder an den Kettenbolzen, insbesondere an aufgezogenen Hülsen, besonders gut und sicher sowie verkantungsfrei führen. Außerdem wird der Verschleiß am Kettenbahnhof und an der Schubkette gemindert. Der im Kettenbahnhof, insbesondere an Kettenumlenkungen, bestehende Widerstand beim Einfahren und Ausfahren der Schubkette wird gemindert. Die Antriebsleistung kann besser ausgenutzt und wirtschaftlicher eingesetzt werden.

Die beanspruchte Kettenschub-Antriebstechnik ist in der Lage, auch großformatige und schwere Flügel zu bewegen. Dies ist selbst in schwierigen Lagen, z.B. bei relativ flach liegenden Dachfenstern von Glasfassaden möglich. Die Schubkette kann dabei auch mit einer überwiegend aufrechten oder senkrechten Richtungskomponente ausfahren und am Flügel angreifen.

Die Kettenführung bildet eine spiralartige und kontinuierliche Führungsbahn für die drehbaren Rollen oder Kettenbolzen bzw. Hülsen. Die Schubkette kann dadurch im Kettenbahnhof zwängungsfrei und insbesondere auch mit weichen Rundungen in einer mehrgängigen Schleife oder einer Spiralform geführt werden. Die Führungsbahn weist hierfür mehrere gerade und rund gebogene Führungsabschnitte auf. Erfindungsgemäß ist die Führungsbahn als schlitzartiger Freiraum zwischen jeweiligen geraden und gebogenen Führungselementen ausgebildet. Die Rollen oder Kettenbolzen bzw. Hülsen können dadurch an der Ober- und Unterseite mit ausreichendem Spiel und großer Sicherheit geführt werden. Die beanspruchte Kettenführung ist auch günstig für das sichere Biegen der im Kettenbahnhof aufgenommenen Schubkette an den Kettenumlenkungen.

Die geraden Führungselemente der Kettenführung sind stegartig ausgebildet und greifen in einen inneren Freiraum an der Ober- und Unterseite der Schubkette zwischen seitlich beabstandete Kettenlaschen ein. Sie können dabei an den Freiraum und dessen Abmessungen angepasst sein. Hierbei kann ein günstiges Führungsspiel eingestellt werden.

Für eine sichere, weiche und widerstandsarme Kettenführung ist die Ausbildung eines gebogenen inneren Führungselements als drehbare Führungsrolle von Vorteil. Eine solche Führungsrolle distanziert zwar die anschließenden geraden Führungsabschnitte und die dortigen Kettenabschnitte. Der Gewinn an Führungsqualität kann dabei die leichte Zunahme an Bauhöhe des Kettenbahnhofs wettmachen. Eine solche Führungsrolle eignet sich besonders gut für eine starke Kettenumlenkung mit einem 180°-Winkel und einem kleinen Umlenkradius.

Ein anderes gebogenes inneres Führungselement kann als stationäre und rund gebogene Führungsleiste ausgebildet sein. Dies ist vor allem für eine spiralartig gebogene Führungsbahn und einen größeren Höhenabstand der anschließenden geraden Führungsabschnitte von Vorteil. Eine solche Führungsleiste spart Platz in der Länge des Kettenbahnhofs.

Für beide Varianten eines inneren gebogenen Führungselements ist das jeweils zugeordnete gebogene äußere Führungselement als stegartige runde Bogenführung ausgebildet. Die gebogenen Führungselemente greifen ebenfalls führend in die besagten Freiräume der Schubkette ein.

Der Kettenbahnhof kann ein offenes Gestell oder ein umfangseitig geschlossenes Gehäuse aufweisen. Das Gestell oder Gehäuse kann eine kanalförmige Kettenaufnahme mit geraden Aufnahmeabschnitten aufweisen. Zusätzlich können ein oder mehrere gebogene Aufnahmeabschnitte für eine durchgehende Kettenaufnahme vorhanden sein. Dies können z.B. durch Gehäuseansätze gebildet werden.

Die gebogenen Aufnahmeabschnitte können alternativ entfallen, wobei die Schubkette an den Kettenumlenkungen offen liegt und an den dortigen gebogenen Führungsabschnitten geführt ist. Das Gestell oder Gehäuse des Kettenbahnhofs kann unter Aussparung dieser ein oder mehren Kettenumlenkungen entsprechend verkürzt sein und nur die geraden Aufnahmeabschnitte aufweisen.

Eine solche Gestaltung ist besonders aufwandsarm und kostengünstig. Sie ermöglicht auch eine leichte und kostengünstige Längenanpassung des Kettenbahnhofs an unterschiedliche Schubkettenlängen. Der beanspruchte Kettenschubantrieb ist variabel und lässt sich an verschiedene Einsatzzwecke, Einbaubedingungen und Lasten in der Art eines Baukastensystems aufwandsarm adaptieren.

Die Kettenaufnahme kann zwei oder mehr gerade und parallele Aufnahmeabschnitte aufweisen. Vorzugsweise sind drei gerade Aufnahmeabschnitte vorhanden. Deren Zahl kann auch mehr als drei betragen. Durch diese Gestaltung kann eine große Kettenlänge schleifen- oder spiralförmig und mit gleichbleibender Biegerichtung in einem kompakten Kettenbahnhof untergebracht werden.

Die geraden und gebogenen Führungselemente können am Gestell oder Gehäuse angeordnet sein. Sie können beidseits bzw. aus entgegengesetzten Richtungen in die Kettenaufnahme und dort in die oberen und unteren Freiräume zwischen den seitlichen Laschen der Schubkette ragen. Die Kettenaufnahme kann andererseits die Kettenglieder an ihrer Ober- und Unterseite und ggfs. auch an den anderen Seiten bedecken und abschirmen.

Die Ausbildung der Schubkette mit beidseitigen, jeweils inneren und äußeren Kettenlaschen mit angepasster gebogener Stützkontur zwischen den benachbarten äußeren Kettenlaschen ist für die beanspruchte Ausbildung des Kettenbahnhofs und der Kettenführung von besonderem Vorteil. Die Schubkette kann dadurch ohne einen geschlossenen Rücken auskommen und hat trotzdem eine hohe Steifigkeit und Festigkeit. Sie kann als Schwerlastkette auch für schwergewichtige Flügel eingesetzt werden. Hierfür ist die widerstandsarme Kettenführung von besonderem Vorteil. Insbesondere kann die Schubkette an den Kettenumlenkungen bei Zug- und Schubbelastung gleichermaßen gut und sicher geführt werden.

Die Schubkette kann ein vorderes Mundstück und ein hinteres Endstück mit einem Begrenzungsmittel für ihre Ausfahrlänge aufweisen. Hierdurch wird ein versehentliches Austreiben der Schubkette durch ein außerhalb des Kettenbahnhofs angeordnetes Treibmittel des Antriebs, insbesondere ein Kettenrad, vermieden. Die Antriebseinheit des Kettenschubantriebs kann einen Motor, ein Getriebe und ein Kettenrad oder ein anderes Antriebsmittel aufweisen. Als Motor wird vorzugsweise ein bürstenloser Elektromotor eingesetzt. Dieser hat einen besonders hohen Wirkungsgrad, der sich optimal mit der Führungsqualität und der Widerstands- oder Reibungsarmut der Kettenführung ergänzt.

In den Unteransprüchen sind weitere vorteilhafte Ausgestaltungen der Erfindung angegeben.

Der beanspruchte Kettenschubantrieb und der beanspruchte Kettenbahnhof können die nachfolgenden vorteilhaften weiteren Ausgestaltungen einzeln oder in Kombination aufweisen.

Die Kettenaufnahme kann zwei oder mehr, insbesondere drei, gerade und parallele Aufnahmeabschnitte aufweisen.

Die Kettenaufnahme kann die Kettenglieder an ihrer Ober- und Unterseite und ggf. an den Seiten bedecken.

Die Schubkette kann ein vorderes Mundstück und ein hinteres Endstück mit einem Begrenzungsmittel für ihre Ausfahrlänge aufweisen.

Die Erfindung ist in den Zeichnungen beispielhaft und schematisch dargestellt. Im Einzelnen zeigen:
- Figur 1:: Eine teilweise aufgebrochene Draufsicht auf einen Kettenschubantrieb mit einer Schubkette und einem Kettenbahnhof,
- Figur 2:: eine geschnittene und geklappte Stirnansicht des Kettenschubantriebs von Figur 1,
- Figur 3:: eine Seitenansicht des Kettenbahnhofs und der aufgenommenen Schubkette gemäß Figur 2 in vergrößerter Darstellung,
- Figur 4:: eine geschnittene Seitenansicht des Kettenbahnhofs gemäß Schnittlinie IV-IV von Figur 3,
- Figur 5:: eine geschnittene Stirnansicht des Kettenbahnhofs gemäß Schnittlinie V-V von Figur 4,
- Figur 6:: eine Variante der Schubkette und
- Figur 7:: einen Längsschnitt durch die Schubkette gemäß Schnittlinie VII - VII von Figur 6.

Die Erfindung betrifft einen Kettenschubantrieb (1), einen Kettenbahnhof (11) und ein Antriebsverfahren für bewegliche Flügel.

Die beweglichen Flügel können Fensterflügel oder Klappen oder andere bewegliche, insbesondere schwenkbare, Gebäudeteile oder Öffnungsverschlüsse, z.B. auch Türen, sein. Die Flügel können auch als Hauben, Kuppeln, Dome oder dgl. ausgebildet sein. Die Flügel können Teile von Rauch-Wärme-Abzugsanlagen (RWA), automatisierten natürlichen Belüftungen oder dgl. sein und werden von dem Kettenschubantrieb (1) geöffnet und geschlossen.

Der Kettenschubantrieb (1) kann in beliebiger Lage an dem stationären Rahmen für den Flügel angeordnet sein. Eine bevorzugte Ausführungsform sieht vor, dass der Flügel Bestandteil eines schwach gegen die Horizontale geneigten Dachflächenfenster ist und von einem aufrecht im umgebenden Fensterrahmen eingebauten Kettenschubantrieb (1) betätigt wird. Der Kettenschubantrieb (1) kann alternativ auch am Flügel angebaut oder eingebaut sein.

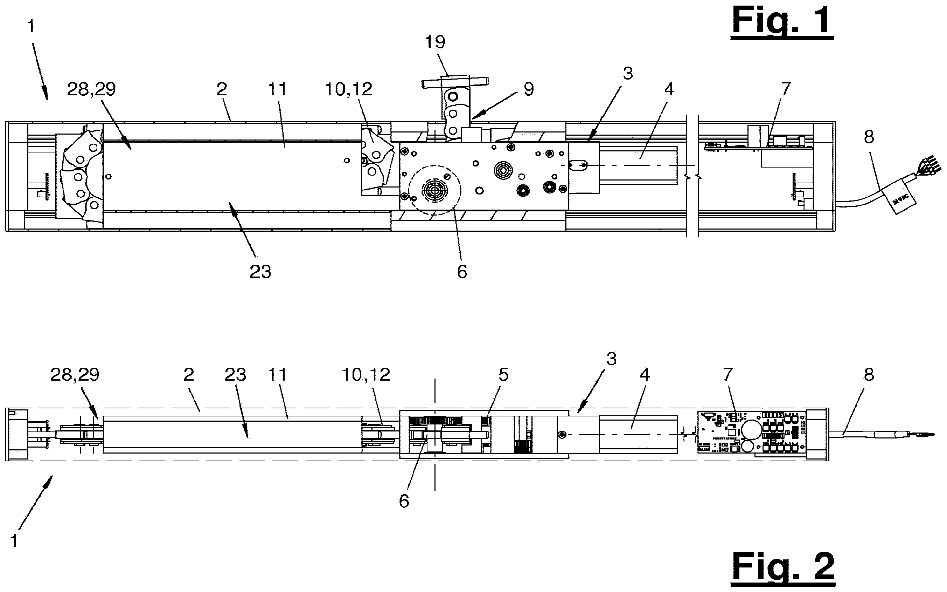

Der in Figur 1 und 2 dargestellte Kettenschubantrieb (1) weist eine motorisch ausfahrbare Schubkette (10) auf. Diese hat an ihrem vorderen freien Ende ein Mundstück (19), an dem ein Lagerbock (nicht dargestellt) bevorzugt schwenkbar angeschlossen werden kann und mit dem beweglichen Flügel verbunden wird. In einer anderen Variante kann der Kettenschubantrieb (1) zwei oder mehr Schubketten (10) aufweisen.

Der Kettenschubantrieb (1) besitzt ein Gehäuse (2), in dem eine Antriebseinheit (3) und ein Kettenbahnhof (11) zur platzsparenden Aufnahme der eingefahrenen Schubkette (10) in einer Spiralenform angeordnet sind. Das Gehäuse (2) kann z.B. als hohles Strangpressprofil ausgebildet sein, an dessen Mantel ein Kettenauslass (9) für die Schubkette (10) angeordnet ist und dessen Enden mit geeigneten Deckeln verschlossen werden.

An einer Gehäuseseite, insbesondere stirnseitig, kann ein Anschluss (8) für eine Versorgung des Kettenschubantriebs (1) angeordnet sein. Hier können z.B. elektrischer Strom und/oder Steuersignale übermittelt werden. Diese können z.B. von einer externen mobilen oder stationären sowie leitungsgebundenen oder drahtlosen Bedienungseinrichtung (nicht dargestellt), von einer übergeordneten Gebäude- oder Brandsteuerung, von benachbarten und im Verbund arbeitenden anderen Kettenschubantrieben (1) oder dgl. kommen.

Die Antriebseinheit (3) weist einen Motor (4), ein nachgeschaltetes Getriebe (5) und ein Antriebsmittel (6) für die Schubkette (10) auf, welches z.B. als Kettenrad ausgebildet ist. Der Motor (4) ist vorzugsweise als Elektromotor ausgebildet, der mit Netz-Wechselspannung oder mit einer niedrigeren Gleichspannung betrieben werden kann. Vorzugsweise handelt es sich um einen bürstenlosen Elektromotor. Die Antriebseinheit (3) kann eine Notentriegelung für den Blockierfall haben.

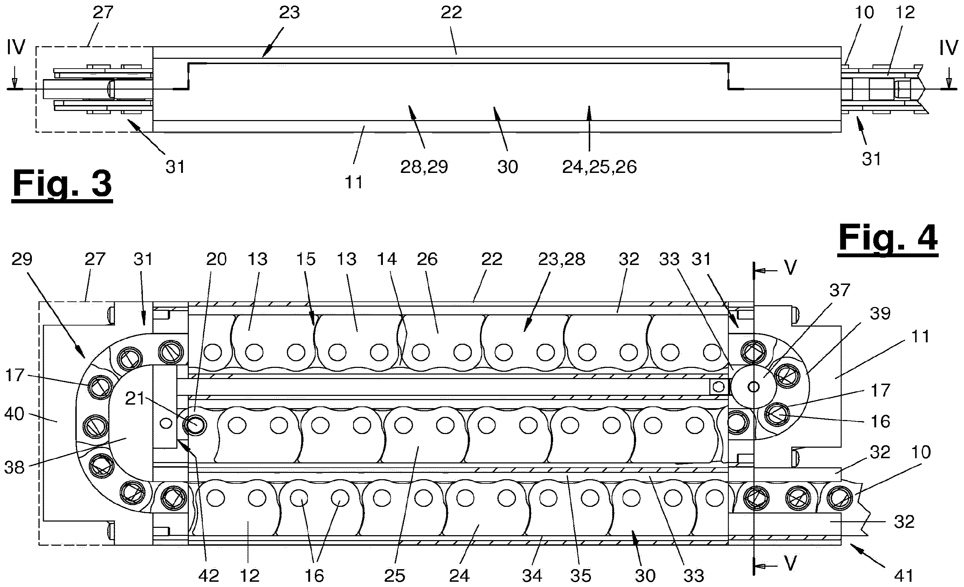

Die Schubkette (10) ist in Figur 4 und 5 sowie Figur 6 und 7 dargestellt.

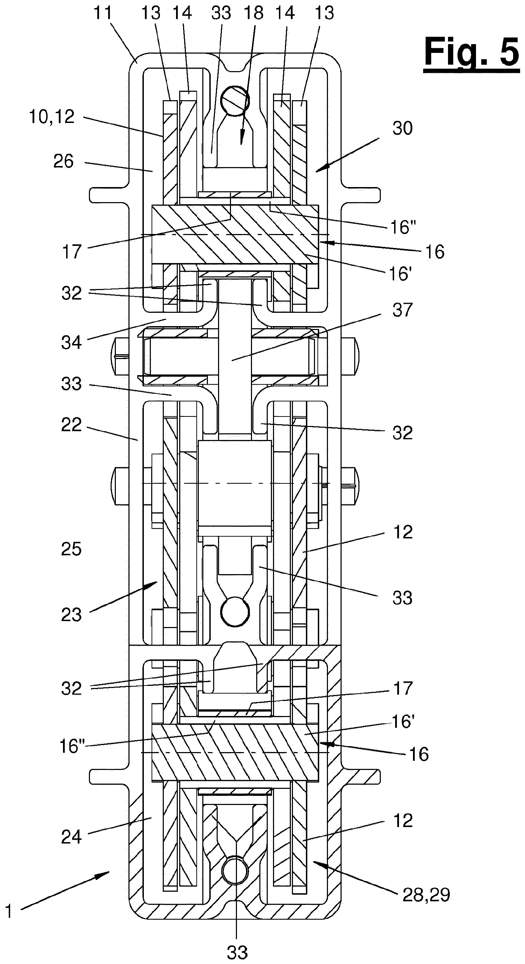

In der Ausführungsform von Figur 4 und 5 ist sie als Rollenkette mit drehbaren Rollen (17) an den Kettengliedern (12) ausgebildet. Die Kettenglieder (12) weisen jeweils beidseits eine Paarung von äußeren Kettenlaschen (13) und inneren Kettenlaschen (14) auf. Die Paarungen sind quer zur Kettenlängsrichtung seitlich beabstandet und bilden zwischen sich an der Ober- und Unterseite jeweils einen Freiraum (18).

Die Kettenglieder (12) weisen jeweils Kettenbolzen (16) auf, welche die Laschenpaarungen quer miteinander verbinden und eine Drehbeweglichkeit für die Kettenglieder (12) an Kettenumlenkungen bieten. Die Kettenbolzen (16) können gemäß Figur 5 aus einem inneren Bolzen (16') zur Verbindung der äußeren Kettenlaschen (13) und einer aufgezogenen Hülse (16") zur Verbindung der inneren Kettenlaschen (14) bestehen. Die Rollen (17) sind zwischen den Kettenlaschen-Paarung und frei drehbar auf dem Kettenbolzen (16), insbesondere auf der Hülse (16"), angeordnet.

Die Schubkette (10) ist rückensteif ausgebildet. Sie kann beim Ausfahren Schubkräfte übertragen und behält dabei ihre gerade Erstreckung. Insbesondere kann die Schubkette (10) in vertikaler Richtung aus dem Gehäuse (2) ausfahren und einen Flügel anheben. Die Schubkette (10) kann als Schwerlastkette ausgebildet sein.

Die äußeren und inneren Kettenlaschen (13,14) haben eine flache bzw. ebene Scheiben- oder Plattenform. Die inneren und äußeren Kettenlaschen (13,14) überlappen einander in Kettenlängsrichtung und sind dabei durch die Kettenbolzen (16) untereinander verbunden. Die in Kettenlängsrichtung aneinander stoßenden äußeren Kettenlaschen (13) weisen eine gegenseitig angepasste und bevorzugt gebogene Stützkontur (15) auf. Sie stützen sich stirnseitig aneinander ab.

Die Kettenbolzen (16) sind gemäß Figur 4 in Kettenlängsrichtung gesehen außermittig angeordnet. Sie sind näher an der Vorderseite als an der Rückenseite der Kettenglieder (12) und ihrer Kettenlaschen (13,14) angeordnet. Die Freiräume (18) haben dadurch gemäß Figur 5 eine unterschiedliche Tiefe.

Die Kettenlaschen (13,14) sind an der Vorderseite im Bereich der Kettenbolzen (16) mit einer Wellenform oder Rundung ausgestattet. Die Rückenseite oder Oberseite der Kettenlaschen (13,14) ist gerade ausgebildet. Die an den Stirnseiten der äußeren Kettenlaschen (13) befindlichen Kontaktstellen der Stützkontur (15) sind gebogen und sind gegenüber der Reihe der Kettenbolzen (16) beabstandet. Dies ist für eine hohen Rückensteifigkeit der Schubkette (10) günstig. Bei Schubbelastung können sich die Kettenglieder (12) über die Stirnseiten der äußeren Kettenlaschen (13) und die Stützkontur (15) kurventolerant aneinander abstützen.

Am hinteren Ende weist die Schubkette (10) ein Endstück (20) auf. Dieses kann mit einem Begrenzungsmittel (21) für die Ausfahrlänge der Schubkette (10) versehen sein. Das Begrenzungsmittel (21) kann z.B. von einem seitlich über das Endstück (20) vorstehenden Stift, insbesondere von einem verlängerten Kettenbolzen, gebildet werden, der vor oder am Kettenrad an einem Anschlag anläuft.

Der Kettenbahnhof (11) weist eine Kettenführung (28) auf, die gemäß Figur 4 und 5 beidseitig in die Schubkette (10) eingreift und die drehbaren Rollen (17) führt. Der Eingriff der Kettenführung (28) erfolgt an gegenüberliegenden Seiten der Schubkette (10) und an den dortigen oberen und unteren Freiräumen (18). Durch die Kettenführung (28) wird die Schubkette (10) im Kettenbahnhof (11) geführt.

Die Kettenführung (28) weist eine spiralartige Führungsbahn (29) mit mehreren geraden und rundgebogenen Führungsabschnitten (30,31) auf. Die gebogenen Führungsabschnitte (31) bilden Kettenumlenkungen zwischen geraden Führungsabschnitten (30). In der gezeigten und bevorzugten Ausführungsform sind drei parallele gerade Führungsabschnitte (30) und zwei einander gegenüberliegende gebogene Führungsabschnitte (31) bzw. Kettenumlenkungen vorhanden.

Die Führungsbahn (29) ist als schlitzartiger Freiraum zwischen jeweils inneren und äußeren Führungselementen der Kettenführung (28) ausgebildet. Die Führungsbahn (29) ist vorzugsweise kontinuierlich ausgebildet. Sie reicht von einem Zugang (41) an der einen Stirnseite des Kettenbahnhofs (11) bis zu einem Ende (42), das z.B. an anderen gegenüberliegenden Stirnseitenbereich angeordnet ist. Die schlitzartige Führungsbahn (29) ist in den geraden Führungsabschnitten (30) zwischen mehreren geraden und parallelen Führungselementen (32,33) ausgebildet. In den gebogenen Führungsabschnitten (31) ist die Führungsbahn (29) zwischen inneren und äußeren gebogenen Führungselementen (37,38,39,40) ausgebildet.

Die geraden Führungselemente (32,33) sind stegartig ausgebildet. Sie sind an den jeweiligen inneren Freiraum (18) der Schubkette (10) angepasst und greifen hier ein. Sie ragen dabei bis in die Nähe der drehbaren Rollen (17), wobei durch Abstände ein geeignetes Führungsspiel vorhanden ist. Die geraden Führungselemente (32,33) haben gemäß Figur 5 eine unterschiedliche Länge.

Ein gebogenes inneres Führungselement (37) ist als frei drehbare Führungsrolle ausgebildet. Diese bewegt sich bei der Umlenkung der laufenden Schubkette (10) mit. Das zugeordnete gebogene äußere Führungselement (39) ist als stegartige runde Bogenführung ausgebildet.

Das andere gebogene innere Führungselement (38) ist als stationäre und rundgebogene Führungsleiste ausgebildet. Das zugehörige äußere gebogene Führungselement (40) ist wiederum als stegartige runde Bogenführung ausgestaltet.

Die gebogenen Führungselemente (37,38,39,40) sind jeweils stirnseitig am Gehäuse oder Gestell (22) des Kettenbahnhofs (11) befestigt.

Der Kettenbahnhof (11) weist gemäß Figur 3 bis 5 ein Gehäuse (22) auf, welches die aufgenommene Schubkette (10) vorzugsweise allseitig umschließt. In einer anderen und nicht dargestellten Ausführungsform kann statt des Gehäuses ein skelettartiges oder rahmenartiges Gestell mit seitlichen Öffnungen vorhanden sein.

Im Gehäuse oder Gestell (22) sind die geraden Führungselemente (32,33) angeordnet. Die gebogenen Führungselemente (37,38,39,40) sind jeweils stirnseitig am Gehäuse oder Gestell (22) des Kettenbahnhofs (11) befestigt.

Das Gestell oder Gehäuse (22) weist eine kanalförmige Kettenaufnahme (23) mit geraden Aufnahmeabschnitten (24,25,26) auf. Die Kettenaufnahme (23) hat zwei oder mehr, insbesondere drei, gerade und parallele Aufnahmeabschnitte (24,25,26). Außerdem können eine oder mehrere gebogene Aufnahmeabschnitte (27) vorhanden sein, die in Figur 3 und 4 gestrichelt angedeutet sind. Solche gebogenen Aufnahmeabschnitte (27) können an einer oder beiden Stirnseiten des Kettenbahnhofs (11) angeordnet sein. Die Kettenaufnahme (23) kann dadurch eine spiralartige und umlaufende Kanalform haben. In den gezeigten Ausführungsbeispielen fehlen die gebogenen Aufnahmeabschnitte, wobei der Kettenbahnhof (11) nur die geraden Aufnahmeabschnitte (24,25,26) aufweist.

Der erste Aufnahmeabschnitt (24) bildet mit seiner Stirnöffnung den Zugang (41) und ist an beiden Stirnseiten offen. Der darüberliegende Aufnahmeabschnitt (25) ist an der einen und dem Zugang (41) benachbarten Stirnseite offen. Die gegenüberliegende Stirnseite bildet das Ende (42) und ist geschlossen. Der oberste und dritte Aufnahmeabschnitt (26) ist an beiden Stirnseiten offen.

Die am Zugang (41) einlaufende Schubkette (10) gelangt über den ersten, unteren Aufnahmeabschnitt (24) und die eine stirnseitig anschließende Kettenumlenkung mit dem größeren Radius zu dem obersten dritten Aufnahmeabschnitt (26) und dann über die andere Kettenumlenkung mit dem engeren Radius in den mittleren Aufnahmeabschnitt (25). Sie wird dabei an der Führungsbahn (29) und den geraden und gebogenen Führungsabschnitten (30,31) geführt.

Die Führungselemente (32,33,37,38,39,40) sind am Gestell oder Gehäuse (22) angeordnet und ragen beidseits bzw. an gegenüberliegenden Seiten in die Kettenaufnahme (23). Die besagten geraden Führungselemente können am Gestell oder Gehäuse (22) angeformt sein. Figur 5 zeigt eine solche Ausgestaltung mit einem z.B. als Spritzgussteil aus Kunststoff oder als Strangpressteil aus Metall ausgebildeten Gehäuse (22).

Die Kettenaufnahme (23) bedeckt die Kettenglieder (12) an ihrer Oberseite und Unterseite. Bei der geschlossenen Gehäuseform ist auch eine Bedeckung an den beiden Seitenflächen vorhanden.

Die Schubkette (10) wird von der Antriebseinheit (3) in den Kettenbahnhof (11) eingeschoben und wieder herausgezogen. Beim Einschieben sind die Rollen (17) an den gerundeten äußeren Führungselementen (39,40) der Kettenumlenkungen bzw. gebogenen Führungsabschnitte (31) geführt und abgestützt. Beim Herausziehen der Schubkette (10) werden die Rollen (17) an den inneren gebogenen Führungselementen (37,38) geführt und abgestützt. Sie rollen dabei an den besagten Führungselementen (37,38,396,40) entlang.

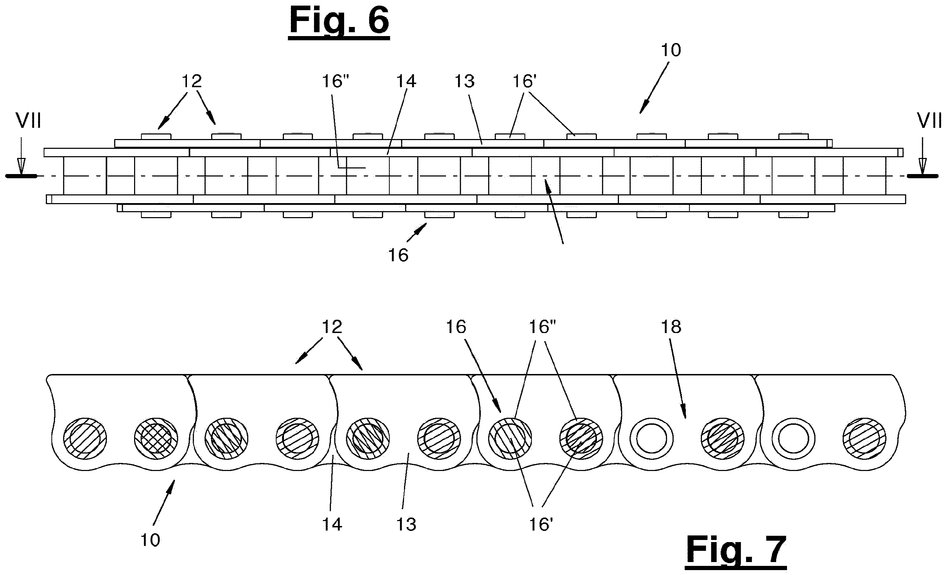

In der Variante der Schubkette (10) von Figur 6 und 7 sind die auf den inneren Bolzen (16') aufgezogenen Hülsen (16") drehbar oder in Aufnahmeöffnungen der inneren Kettenlaschen (14) starr angeordnet. Sie können z.B. in die Aufnahmeöffnungen eingepresst sein in der Art einer Hülsenkette. Die Hülsen (16") rollen oder gleiten an den besagten Führungselementen (37,38,396,40) entlang.

Die Schubkette (10) ist bis auf die Rollen (17) ansonsten in gleicher Weise wie im ersten Ausführungsbeispiel ausgebildet. Der Kettenbahnhof (11) und die anderen Komponenten des Kettenschubantriebs ((1) sind in der vorbeschriebenen Weise gemäß Figur 1 bis 5 ausgebildet. Die beidseits in die Schubkette (10) und deren Freiräume (18) eingreifende Kettenführung (28) kontaktiert und führt die Hülsen (16").

Abwandlungen der gezeigten und beschriebenen Ausführungsformen sind im Rahmen der beigefügten Ansprüche in verschiedener Weise möglich.

### BEZUGSZEICHENLISTE

- 1: Kettenschubantrieb
- 2: Gehäuse
- 3: Antrieb
- 4: Motor
- 5: Getriebe
- 6: Kettenrad
- 7: Steuerung
- 8: Anschluss
- 9: Kettenauslass
- 10: Schubkette
- 11: Kettenbahnhof
- 12: Kettenglied
- 13: Kettenlasche außen
- 14: Kettenlasche innen
- 15: Stützkontur
- 16: Kettenbolzen
- 16': innerer Bolzen
- 16": Hülse
- 17: Rolle
- 18: Freiraum
- 19: Mundstück
- 20: Endstück
- 21: Begrenzungsmittel
- 22: Gehäuse, Gestell
- 23: Kettenaufnahme
- 24: Aufnahmeabschnitt gerade
- 25: Aufnahmeabschnitt gerade
- 26: Aufnahmeabschnitt gerade
- 27: Aufnahmeabschnitt gebogen
- 28: Kettenführung
- 29: Führungsbahn
- 30: Führungsabschnitt gerade
- 31: Führungsabschnitt gebogen
- 32: Führungselement, Führungssteg
- 33: Führungselement, Führungssteg
- 34: Boden
- 35: Decke
- 36: Seitenwand
- 37: Führungselement innen, Umlenkrolle
- 38: Führungselement innen, Führungsleiste
- 39: Führungselement außen, Bogenführung außen
- 40: Führungselement außen, Bogenführung außen
- 41: Zugang
- 42: Ende

## Patentansprüche

1. Kettenbahnhof für eine mehrgliedrige Schubkette (10) eines Kettenschubantriebs (1) für bewegliche Flügel, insbesondere Fensterflügel oder Klappen, wobei der Kettenbahnhof (11) eine Kettenführung (28) aufweist, die beidseitig in die Schubkette (10) eingreiffähig ist, wobei die Kettenführung (28) eine spiralartige und kontinuierliche Führungsbahn (29) mit mehreren geraden und rund gebogenen Führungsabschnitten (30,31) aufweist, wobei die gebogenen Führungsabschnitte (31) Kettenumlenkungen zwischen geraden Führungsabschnitten (30) bilden und wobei die Führungsbahn (29) als schlitzartiger Freiraum zwischen geraden Führungselementen (32,33) und gebogenen Führungselementen (37,38,39,40) ausgebildet ist und die schlitzartige Führungsbahn (29) in den geraden Führungsabschnitten (30) jeweils zwischen mehreren geraden und parallelen Führungselementen (32,33) ausgebildet ist und in den gebogenen Führungsabschnitten (31) zwischen inneren und äußeren gebogenen Führungselementen (37,38,39,40) ausgebildet ist, wobei
ein gebogenes inneres Führungselement (37,38) als drehbare Führungsrolle ausgebildet ist und die gebogenen äußeren Führungselemente (39,40) als stegartige runde Bogenführungen ausgebildet sind und wobei
die geraden Führungselemente (32,33) der Kettenführung (28) stegartig ausgebildet sind und in einen inneren Freiraum (18) an der Ober- und Unterseite der Schubkette (10) zwischen seitlich beabstandete Kettenlaschen (13,14) eingreifen können.

2. Kettenbahnhof nach Anspruch 1, **dadurch gekennzeichnet, dass** die Kettenführung (28) drei parallele gerade Führungsabschnitte (30) und zwei einander gegenüberliegende gebogene Führungsabschnitte (31) aufweist.

3. Kettenschubantrieb für bewegliche Flügel, insbesondere Fensterflügel oder Klappen, wobei der Kettenschubantrieb (1) eine mehrgliedrige Schubkette (10) und einen Kettenbahnhof (11) nach Anspruch 1 der 2 aufweist, wobei die Schubkette (10) als Rollenkette mit drehbaren Rollen (17) an den Kettengliedern (12) ausgebildet ist und Kettenbolzen (16) mit aufgezogenen Hülsen (16") an den Kettengliedern (12) aufweist, wobei die Kettenführung (28) des Kettenbahnhofs (11) beidseitig in die Schubkette (10) eingreift und die Rollen (17) oder Hülsen (16") führt.

4. Kettenschubantrieb nach Anspruch 3, **dadurch gekennzeichnet, dass** die geraden Führungselemente (32,33) stegartig ausgebildet und an einen inneren Freiraum (18) der Schubkette (10) zwischen seitlich beabstandeten Kettenlaschen (13,14) angepasst ist.

5. Kettenschubantrieb nach Anspruch 3 oder 4, **dadurch gekennzeichnet, dass** der Kettenbahnhof (11) ein Gestell oder Gehäuse (22) mit einer kanalförmigen und ggf. spiralartigen Kettenaufnahme (23) mit geraden und ggf. gebogenen Aufnahmeabschnitten (24,25,26,27) aufweist.

6. Kettenschubantrieb nach Anspruch 5, **dadurch gekennzeichnet, dass** die Führungselemente (32,33,37,38,39,40) am Gestell oder Gehäuse (22) angeordnet, vorzugsweise angeformt, sind und beidseits in die Kettenaufnahme (23) ragen.

7. Kettenschubantrieb nach einem der Ansprüche 3 bis 6, **dadurch gekennzeichnet, dass** der Kettenschubantrieb (1) eine Antriebseinheit (3) mit einem Motor (4), bevorzugt einem bürstenlosen Elektromotor, einem Getriebe (5) und einem Kettenrad (6) aufweist.

8. Kettenschubantrieb nach einem der Ansprüche 3 bis 7, **dadurch gekennzeichnet, dass** die Schubkette (10) rückensteif ausgebildet ist.

9. Kettenschubantrieb nach einem der Ansprüche 3 bis 8, **dadurch gekennzeichnet, dass** die Schubkette (10) beidseits innere und äußere Kettenlaschen (13,14) aufweist, die einander in Kettenlängsrichtung überlappen und durch Kettenbolzen (16) verbunden sind.

10. Kettenschubantrieb nach Anspruch 9, **dadurch gekennzeichnet, dass** die in Kettenlängsrichtung aneinander stoßenden äußeren Kettenlaschen (13) eine gegenseitig angepasste gebogene Stützkontur (15) aufweisen.

11. Kettenschubantrieb nach Anspruch 9 oder 10, **dadurch gekennzeichnet, dass** die Rollen (17) zwischen den beidseitigen Kettenlaschen (13,14) angeordnet und drehbar auf Kettenbolzen (16) gelagert sind.

## Claims

1. Chain station for a multi-link thrust chain (10) of a chain thrust drive (1) for movable casements, in particular window casements or flaps, wherein the chain station (11) has a chain guide (28) which is capable of engaging in the thrust chain (10) on both sides, wherein the chain guide (28) has a helical and continuous guide track (29) having a plurality of straight and round arcuate guide portions (30, 31), wherein the arcuate guide portions (31) form chain deflections between straight guide portions (30), and wherein the guide track (29) is configured as a slot-type void between straight guide elements (32, 33) and arcuate guide elements (37, 38, 39, 40) and the slot-type guide track (29) in the straight guide portions (30) is in each case configured between a plurality of straight and parallel guide elements (32, 33), and in the arcuate guide portions (31) is configured between inner and outer curved guide elements (37, 38, 39, 40), wherein an arcuate inner guide element (37, 38) is configured as a rotatable guide roller, and the arcuate outer guide elements (39, 40) are configured as web-type round arcuate guides, and wherein the straight guide elements (32, 33) of the chain guide (28) are configured in the manner of webs and can engage in an inner void (18) between laterally spaced-apart chain link plates (13, 14) on the upper and lower side of the thrust chain (10).

2. Chain station according to Claim 1, **characterized in that** the chain guide (28) has three parallel straight guide portions (30) and two mutually opposite arcuate guide portions (31).

3. Chain thrust drive for movable casements, in particular window casements or flaps, wherein the chain thrust drive (1) has a multi-link thrust chain (10) and a chain station (11) according to Claim 1 or 2, wherein the thrust chain (10) is configured as a roller chain having rotatable rollers (17) on the chain links (12), and has link pins (16) having fitted sleeves (16") on the chain links (12), wherein the chain guide (28) of the chain station (11) engages in the thrust chain (10) on both sides and guides the rollers (17) or sleeves (16").

4. Chain thrust drive according to Claim 3, **characterized in that** the straight guide elements (32, 33) are configured in the manner of webs and adapted to an inner void (18) of the thrust chain (10) between laterally spaced-apart chain link plates (13, 14) .

5. Chain thrust drive according to Claim 3 or 4, **characterized in that** the chain station (11) has a frame or housing (22) having a duct-shaped and optionally helical chain receptacle (23) having straight and optionally arcuate receptacle portions (24, 25, 26, 27).

6. Chain thrust drive according to Claim 5, **characterized in that** the guide elements (32, 33, 37, 38, 39, 40) are disposed on the frame or housing (22), preferably moulded thereon, and protrude into the chain receptacle (23) on both sides.

7. Chain thrust drive according to one of Claims 3 to 6, **characterized in that** the chain thrust drive (1) has a drive unit (3) having a motor (4), preferably a brushless electric motor, a gearbox (5), and a chain wheel (6).

8. Chain thrust drive according to one of Claims 3 to 7, **characterized in that** the thrust chain (10) is configured with a rigid back.

9. Chain thrust drive according to one of Claims 3 to 8, **characterized in that** the thrust chain (10) on both sides has inner and outer chain link plates (13, 14) which mutually overlap in the longitudinal direction of the chain and are connected by link pins (16).

10. Chain thrust drive according to Claim 9, **characterized in that** the outer chain link plates (13) that abut one another in the longitudinal direction of the chain have a mutually adapted arcuate support contour (15).

11. Chain thrust drive according to Claim 9 or 10, **characterized in that** the rollers (17) are disposed between the chain link plates (13, 14) on both sides and mounted so as to be rotatable on link pins (16).

## Revendications

1. Station à chaîne pour une chaîne de poussée à plusieurs maillons (10) d'un entraînement à chaîne en poussée (1) pour des battants mobiles, notamment des battants de fenêtre ou des clapets, la station à chaîne (11) comprenant un guide de chaîne (28), qui est apte à pénétrer des deux côtés dans la chaîne de poussée (10), le guide de chaîne (28) comprenant une voie de guidage en spirale et continue (29) munie de plusieurs sections de guidage droites et incurvées en rond (30, 31), les sections de guidage incurvées (31) formant des déviations de chaîne entre des sections de guidage droites (30), et la voie de guidage (29) étant configurée sous la forme d'un espace libre en forme de fente entre des éléments de guidage droits (32, 33) et des éléments de guidage incurvés (37, 38, 39, 40), et la voie de guidage en forme de fente (29) dans les sections de guidage droites (30) étant à chaque fois configurée entre plusieurs éléments de guidage droits et parallèles (32, 33), et dans les sections de guidage incurvées (31) étant configurée entre des éléments de guidage incurvés intérieurs et extérieurs (37, 38, 39, 40), un élément de guidage intérieur incurvé (37, 38) étant configuré sous la forme d'un rouleau de guidage rotatif et les éléments de guidage extérieurs incurvés (39, 40) étant configurés sous la forme de guides curvilignes ronds en forme de traverse et les éléments de guidage droits (32, 33) du guide de chaîne (28) étant configurés en forme de traverse et pouvant pénétrer dans un espace libre intérieur (18) entre des brides de chaîne espacées latéralement (13, 14) sur le côté supérieur et inférieur de la chaîne de poussée (10) .

2. Station à chaîne selon la revendication 1, **caractérisée en ce que** le guide de chaîne (28) comprend trois sections de guidage droites parallèles (30) et deux sections de guidage incurvées opposées l'une à l'autre (31).

3. Entraînement à chaîne en poussée pour des battants mobiles, notamment des battants de fenêtre ou des clapets, l'entraînement à chaîne en poussée (1) comprenant une chaîne de poussée à plusieurs maillons (10) et une station à chaîne (11) selon la revendication 1 ou 2, la chaîne de poussée (10) étant configurée sous la forme d'une chaîne à rouleaux munie de rouleaux rotatifs (17) sur les maillons de chaîne (12) et comprenant des boulons de chaîne (16) munis de douilles enfilées (16") sur les maillons de chaîne (12), le guide de chaîne (28) de la station à chaîne (11) pénétrant des deux côtés dans la chaîne de poussée (10) et guidant les rouleaux (17) ou les douilles (16") .

4. Entraînement à chaîne en poussée selon la revendication 3, **caractérisé en ce que** les éléments de guidage droits (32, 33) sont configurés en forme de traverse et adaptés à un espace libre intérieur (18) de la chaîne de poussée (10) entre des brides de chaîne espacées latéralement (13, 14).

5. Entraînement à chaîne en poussée selon la revendication 3 ou 4, **caractérisé en ce que** la station à chaîne (11) comprend un châssis ou boîtier (22) muni d'un logement de chaîne (23) en forme de canal et éventuellement en spirale, muni de sections de logement droites et éventuellement incurvées (24, 25, 26, 27).

6. Entraînement à chaîne en poussée selon la revendication 5, **caractérisé en ce que** les éléments de guidage (32, 33, 37, 38, 39, 40) sont agencés, de préférence formés, sur le châssis ou le boîtier (22), et dépassent des deux côtés dans le logement de chaîne (23) .

7. Entraînement à chaîne en poussée selon l'une quelconque des revendications 3 à 6, **caractérisé en ce que** l'entraînement à chaîne en poussée (1) comprend une unité d'entraînement (3) munie d'un moteur (4), de préférence d'un moteur électrique sans balais, d'une transmission (5) et d'une roue à chaîne (6).

8. Entraînement à chaîne en poussée selon l'une quelconque des revendications 3 à 7, **caractérisé en ce que** la chaîne de poussée (10) est configurée à dos rigide.

9. Entraînement à chaîne en poussée selon l'une quelconque des revendications 3 à 8, **caractérisé en ce que** la chaîne de poussée (10) comprend des deux côtés des brides de chaîne intérieures et extérieures (13, 14), qui se chevauchent dans la direction longitudinale de chaîne et sont reliées par des boulons de chaîne (16) .

10. Entraînement à chaîne en poussée selon la revendication 9, **caractérisé en ce que** les brides de chaîne extérieures (13) qui se heurtent dans la direction longitudinale de chaîne présentent un contour de support incurvé mutuellement adapté (15).

11. Entraînement à chaîne en poussée selon la revendication 9 ou 10, **caractérisé en ce que** les rouleaux (17) sont agencés entre les brides de chaîne (13, 14) des deux côtés et sont montés de manière rotative sur des boulons de chaîne (16).
